Europäisches Patentamt

European Patent Office

Office européen des brevets

(19)

(11) Veröffentlichungsnummer: **0 504 664 A1**

(12) **EUROPÄISCHE PATENTANMELDUNG**

(21) Anmeldenummer: **92103734.7**

(22) Anmeldetag: **05.03.92**

(51) Int. Cl.⁵: **B23K 7/10**

(30) Priorität: **21.03.91 DE 9103466 U**

(43) Veröffentlichungstag der Anmeldung:
**23.09.92 Patentblatt 92/39**

(84) Benannte Vertragsstaaten:
**AT BE CH DE DK ES FR GB GR IT LI LU NL SE**

(71) Anmelder: **STASCHEL INDUSTRIE-SERVICE GmbH**
**Kaiserswerther Strasse 51**
**W-4100 Duisburg 28(DE)**
Anmelder: **FROMBERGER FAHRZEUGWERK GmbH & CO. KG**

**Krabbenkamp 13**
**W-4100 Duisburg 12(DE)**

(72) Erfinder: **Staschel, Heinz**
**Fichtenstrasse 140**
**W-4100 Duisburg 29(DE)**
Erfinder: **Fromberger Heinz**
**SaarnerStrasse 429**
**W-4330 Mülheim/Ruhr(de)**

(74) Vertreter: **Spalthoff, Adolf, Dipl.-Ing. et al**
**Pelmanstrasse 31 Postfach 34 02 20**
**W-4300 Essen 1(DE)**

(54) **Vorrichtung zur staubfreien Zerkleinerung grossvolumiger Roheisenbären.**

(57) Eine Vorrichtung zur Zerkleinerung großvolumiger Bären (1) hat eine Brennlanze (20), mittels der die großvolumigen Bären in transportable und handhabbare Teile zerschneidbar sind.

Um bei der Zerkleinerung großvolumiger Bären Emissionen zu reduzieren bzw. zu verhindern und um für die mit der Zerkleinerung von Bären befaßten Personen ergonomisch günstigere Arbeitsplatzbedingungen zu bieten, hat die Vorrichtung zur Zerkleinerung großvolumiger Bären (1) eine Absaughaube (2), die über den zu brennenden Bären (1) aufstellbar ist und eine Öffnung (19) aufweist, durch die die Brennlanze (20) an den zu zerschneidenden Bären (1) heranführbar ist, und eine mobile Filteranlage (7), deren Eingangsseite durch eine Rohgasleitungsverbindung (5) an die Absaughaube (2) angeschlossen ist und in der der beim Zerschneiden anfallende Rohgasstrom in Reingas und Stäube trennbar ist.

Die Erfindung bezieht sich auf eine Vorrichtung zur Zerkleinerung großvolumiger Roheisenblöcke, zu der eine Brennlanze gehört, mittels der die großvolumigen Roheisenblöcke in transportable und handhabbare Teile zerschneidbar sind.

In der Roheisen- und Stahlerzeugung fallen als Neben- bzw. Abfallprodukt Schlacken an, die noch erhebliche Roheisen- und Stahlmengen enthalten. In den verschiedenen Bearbeitungsstufen der Schlacken werden die Restmengen aus erstarrtem Roheisen und Stahl - sog. "Bären" - aussortiert. Aus Wirtschaftlichkeitsüberlegungen werden diese großvolumigen Roheisen- und Stahlblöcke bzw. Bären wieder eingeschmolzen.

Für den Transport und den Wiedereinschmelzungsprozeß müssen die meisten Bären in Gewicht und Größe reduziert und daher in kleinere Teile geschnitten werden. Für diesen Zerschneidungsvorgang werden Brennlanzen eingesetzt. Die dabei in großen Mengen freigesetzten Rauchgase und Stäube dringen bei der zur Zeit angewandten Technik ungehindert in die Atmosphäre. Hierdurch werden erhebliche Emissionsschäden verursacht. Die mit dem Schneiden der Bären befaßten Personen sind einer erhöhten gesundheitlichen Gefährdung ausgesetzt.

Der Erfindung liegt die Aufgabe zugrunde, eine Vorrichtung zur Zerkleinerung großvolumiger Roheisen- und Stahlblöcke zu schaffen, mittels der Emissionen reduziert bzw. verhindert werden können und die darüber hinaus den mit der Zerkleinerung befaßten Personen ergonomisch günstigere Arbeitsplatzbedingungen bietet.

Diese Aufgabe wird erfindungsgemäß dadurch gelöst, daß die Vorrichtung zur Zerkleinerung großvolumiger Roheisen- bzw. Stahlblöcke eine Absaughaube, die über den zu brennenden Roheisen- und Stahlblöcken aufstellbar ist und eine Öffnung aufweist, durch die die Brennlanze an den zu zerschneidenden Roheisen- bzw. Stahlblock heranführbar ist, und eine mobile Filteranlage aufweist, deren Eingangsseite durch eine Rohgasleitungsverbindung an die Absaughaube angeschlossen ist und in der der beim Zerschneiden anfallende Rohgasstrom in Reingas und Stäube trennbar ist. Die beim Zerkleinern bzw. Brennen der Roheisen- bzw. Stahlblöcke entstehenden Rauchgase und Stäube werden durch die an die Absaughaube angeschlossene Rohgasleitungsverbindung in die Filteranlage abgesaugt. In der Filteranlage wird das Rohgas in Reingas und Stäube aufgetrennt. Hierdurch wird eine nahezu vollständige Emissionsfreiheit verwirklicht, die auch verschärften gesetzlichen Vorschriften völlig genügt. Durch die verfahrbare bzw. mobile Ausgestaltung der Filteranlage kann die erfindungsgemäße Vorrichtung ohne Änderung der bisherigen Arbeitsabläufe beim Brennen von Bären eingesetzt werden. Ein aufwendiges Planfeststellungsverfahren für den Bau einer stationären Filteranlage entfällt.

Wenn an der Anschlußstelle zwischen der Absaughaube und der Rohgasleitungsverbindung ein Funkenabscheider angeordnet wird, kann zuverlässig verhindert werden, daß Funken, die beim Brennen der Bären unterhalb der Absaughaube zwangsläufig entstehen, durch die Rohgasleitungsverbindung in die Filteranlage geraten und dort erhebliche Schäden anrichten. Zum Sammeln bzw. zum Speichern der innerhalb des Funkenabscheiders ausgeschiedenen Funken und anderen groben Bestandteile ist der Funkenabscheider an eine Staubtonne angeschlossen.

Zur Einsparung von Gewicht kann die Rohgasleitungsverbindung aus mit einer schwer entflammbaren Kunststoffummantelung versehenen Spirallutten bestehen. Hierdurch wird zudem eine vergleichsweise hohe Flexibilität der Rohgasleitungsverbindung erreicht.

Wenn der Unterdruck zur Absaugung des beim Zerschneiden des Bären anfallenden Rohgasstroms mittels eines Ventilators erzeugt wird, der am Filteranlagen fernen Ende eines Reingaskanals der Filteranlage angeordnet ist, kann die gesamte Filteranlage sowie die der Filteranlage vorgeschaltete Rohgasleitungsverbindung und die Absaughaube mittels eines einzigen Ventilators betrieben werden. Darüber hinaus ist durch diese Anordnung des Ventilators dessen Beeinträchtigung durch staubbelastetes Rohgas bzw. noch besonders heißes Rohgas völlig ausgeschlossen.

Um den wachsenden Anforderungen an den Lärmschutz zu genügen, kann zwischen dem Ventilator und einem Reingasaustritt der Filteranlage ein Schalldämpfer angeordnet sein.

Der Staubaustrag aus der Filteranlage läßt sich in konstruktiv einfacher Weise mittels einer Abzugsschnecke verwirklichen, von der aus der anfallende Staub mittels eines Rohrkettenförderers in einen Staubsammelbunker befördert wird.

Um einen dem Bunker nachgeschalteten Mischer kontrolliert betreiben zu können, ist stromab des Bunkers eine Zellenradschleuse angeordnet, durch die der Staub dosiert in den Mischer aufgebbar ist.

Wenn der Mischer an eine Befeuchtungseinrichtung angeschlossen ist, mittels der der zu behandelnde Staub in einen erdfeuchten Zustand bringbar ist, in dem er dann auf einem reversierbaren Förderband aus dem Mischer austragbar ist, kann eine Staubbelästigung der Umgebung durch den auf dem Förderband ausgeförderten Staub weistestgehend vermieden werden.

Eine einfache Ausgestaltung als transportable Einheit läßt sich für die Filteranlage der erfindungsgemäßen Vorrichtung zur Zerkleinerung großvolumiger Roheisen- und Stahlblöcke erreichen, wenn die Filteranlage und die ihr nachgeschalteten Aggregate auf einem gemeinsamen mobilen Rahmen angeordnet sind.

Wenn die Brennlanze von einem verfahrbaren, mit einem geschlossenen Bedienungsstand versehenen Gerät aus fernbedienbar ausgestaltet ist, d.h., wenn die Brennlanze quasi Teil eines fernsteuerbaren Lanzenroboters ist, kann das Brennen der Bären aus sicherer Entfernung durchgeführt werden.

Vorteilhaft ist die Filteranlage als Reihenfilter in Sektionsbauweise ausgebildet und aus Filterschläuchen aufgebaut.

Eine Reinhaltung der Filteranlage läßt sich in einfacher Weise erreichen, wenn jede Filterschlauchreihe mittels oberhalb der Filterschläuche angeordneter Düsenrohre unabhängig rückspülbar ist, wobei die Düsenrohre an Druckluftspeicher angeschlossen sind, in denen integrierte Membranventile und gekapselte Magnetventile angeordnet sind, die durch ein elektronisches Steuergerät ansteuerbar sind.

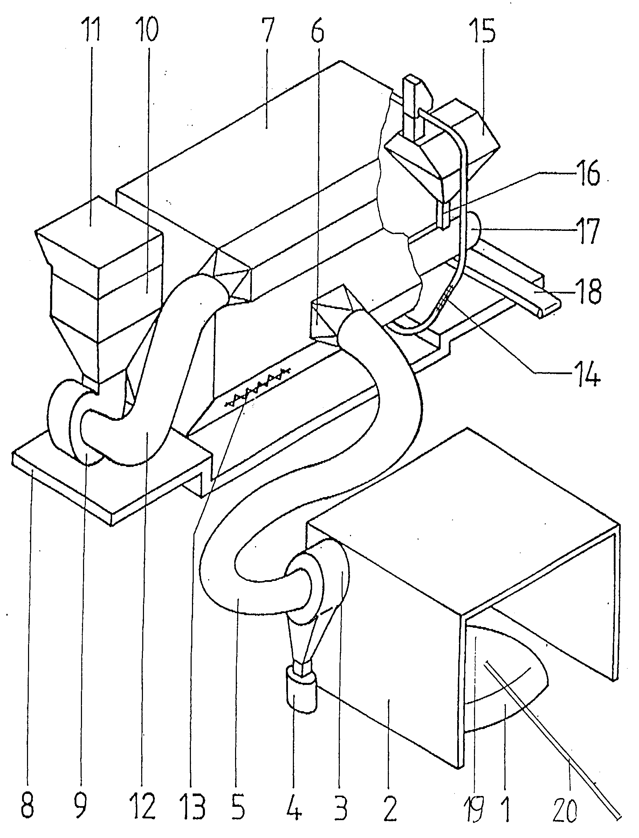

Im folgenden wird die Erfindung anhand eines Ausführungsbeispiels unter Bezugnahme auf die Zeichnung näher erläutert, in der eine erfindungsgemäße Vorrichtung zur Zerkleinerung großvolumiger Bären schematisch dargestellt ist.

Ein großvolumiger Bär 1 aus Roheisen oder Stahl befindet sich unter einer ihn seitlich und oben umgebenden Absaughaube 2. Die Absaughaube 2 ist an einer Seite mit einer Öffnung 19 ausgebildet, durch die hindurch eine Brennlanze 20 unter die Absaughaube 2 an den großvolumigen Bären 1 heranführbar ist. Mittels der Brennlanze 20 wird der großvolumige Bär 1 unter der Absaughaube 2 in handhabbare und transportierbare Teile zerschnitten, die dann wieder eingeschmolzen werden können.

Am Anschluß zwischen der Absaughaube 2 und einer Rohgasleitungsverbindung 5 ist ein Funkenabscheider 3 angeordnet, der mit radial angeordneten Prallblechen die Schwerstbestandteile des in dem beim Brennen des Bären 1 entstehenden Rohgasstrom enthaltenen Staubs vorab ausfiltert und so die Weiterleitung von Funken in die Rohgasleitungsverbindung 5 und eine ihr nachgeschaltete Filteranlage 7 verhindert. Die im Funkenabscheider 3 abgetrennten Stäube bzw. Funken werden in einer an den Funkenabscheider 3 angeschlossenen Staubtonne 4 gesammelt.

Stromab des Funkenabscheiders 3 gerät der von Schwerstbestandteilen gereinigte Rohgasstrom in die Rohgasleitungsverbindung 5, die aus Gewichtsgründen aus Spirallutten mit schwer entflammbarer Kunststoffummantelung nach DIN 21605 hergestellt ist. Die Rohgasleitungsverbindung 5 ist über nicht im einzelnen dargestellte Schnellverschlußkupplungen absaughaubenseitig an den Funkenabscheider 3 und filteranlagenseitig an einen Rohgasleitungsanschluß 6 angeschlossen, von dem aus der Rohgasstrom in den unteren Bereich der Filteranlage 7 gelangt. Die Temperatur des Rohgasstromes beträgt zu diesem Zeitpunkt bzw. an dieser Stelle nur noch etwa 30 Grad C.

An den nicht dargestellten Filterschläuchen der als Reihenfilter in Sektionsbauweise ausgebildeten Filteranlage 7 erfolgt die Trennung des Rohgases in Reingas und Staub. Die Filterschläuche können durch Druckluftimpulse vollautomatisch abgereinigt werden. Hierzu sind oberhalb der Filterschläuche nicht dargestellte Düsenrohre angeordnet, durch die jede Filterschlauchreihe unabhängig von den übrigen rückgespült werden kann. Zu diesem Zweck sind an einem Ende der Düsenrohre Druckluftspeicher mit integrierten Membranventilen und gekapselten Magnetventilen angeordnet. Durch ein elektronisches Steuergerät werden die Magnetventile in periodischer Folge nacheinander angesteuert. Die aus dem Druckluftspeicher entweichende Druckluft wird über das zugeordnete Düsenrohr und die den einzelnen Filterschläuchen zugeordneten Stahlrohre in die Filterschläuche einer Filterschlauchreihe geleitet. Der Druckluftstrahl reißt aufgrund der Injektorwirkung Reingas mit. Durch das Gemisch aus Druckluft und Reingas werden die Filterschläuche schlagartig rückgespült. Die Druckluft steht unter einem Überdruck von ca. 6 bar.

Das elektronische Steuergerät und die vorstehend beschriebene eingesetzte Druckluftwartungseinheit werden elektrisch beheizt.

Den für die Rückspülung erforderlichen Druckluftbedarf von 90 m3/h erzeugt ein Rotationskompressor. Dieser ist mit einer kombinierten Öl-Druckluft-Nachkühlung und einer vollautomatischen Steuerung für Durchlauf- und Aussetzbetrieb ausgestattet.

Wenn die Filteranlage 7 z.B. für einen Rohgasvolumenstrom von 50.000 m3/h ausgelegt ist und eine Gesamtfilterfläche von 660 m2 aufweist, entfallen auf jeden m2 der Gesamtfilterfläche ca. 75,7 m3/h bzw. 1,26 m3/min.

Das in der Filteranlage 7 vom Staub befreite Reingas gelangt in einen Reingaskanal 12, an dessen filteranlagenfernen Ende ein Ventilator 9 angeordnet ist, der den zum Betrieb der Absaughaube 2 und der Filteranlage 7 erforderlichen Unterdruck erzeugt. Stromab des Ventilators 9 wird der nunmehr schadstoffarme Reingasstrom über eine für den Aussaugvorgang installierte elektromotorisch betriebene Drosselklappe, einen dieser Drosselklappe nachgeschalteten, in Kulissenbauart ausgeführten Schalldämpfer 10 und einen dem Schalldämpfer 10 nachgeschalteten Reingasaustritt 11 ins Freie geführt.

Der untere Abschnitt der Filteranlage 7 ist als Staubsammeltrichter mit einem Doppelrumpf augestaltet, in dessen unteren Bereich zwei Abzugsschnecken 13 angeordnet sind, die bei dem vorstehend erwähnten Aufführungsbeispiel der Filteranlage 7 etwa über eine Kapazität von 5 m3/h verfügen, wie auch die den Abzugsschnecken 13 nachgeschalteten Aggregate.

Mittels der Abzugsschnecken 13 wird der Staub zu einem Rohrkettenförderer 14 gefördert, dessen Austrag in einen Staubsammelbunker 15 mündet. Der Staubsammelbunker 15 ist in Vertikalrichtung oberhalb eines Mischers 17 angeordnet, wobei zwischen dem Auslauf des Staubsammelbunkers 15 und dem Einlauf des Mischers 17 eine Zellenradschleuse 16 angeordnet ist, mittels der die in den Mischer 17 eintretende Staubmenge dosiert wird. Im Mischer 17 ist eine nicht dargestellte Befeuchtungseinrichtung angeordnet, mittels der der Staub gleichmäßig befeuchtet wird. Entsprechend den gestellten Anforderungen wird der Staub im Mischer 17 mit anderen Stoffen für das Recycling oder für eine Deponierung vermischt. Am Auslauf des Mischers 17 ist ein reversierbares Förderband 18 angeordnet, mittels dem der aufgearbeitete und befeuchtete Staub abgefördert wird, ohne daß die umgebende Atmosphäre mit Staub belastet würde.

Die Filteranlage 7 und die vorstehend beschriebenen der Filteranlage 7 nachgeschalteten Aggregate sind auf einem gemeinsamen, verfahrbaren Rahmen 8 angeordnet.

**Patentansprüche**

1. Vorrichtung zur Zerkleinerung großvolumiger Bären (1), mit einer Brennlanze (20), mittels der die großvolumigen Bären in transportable und handhabbare Teile zerschneidbar sind, gekennzeichnet durch eine Absaughaube (2), die über den zu brennenden Bären (1) aufstellbar ist und eine Öffnung (19) aufweist, durch die die Brennlanze (20) an den zu zerschneidenden Bären (1) heranführbar ist, und eine mobile Filteranlage (7), deren Eingangsseite durch eine Rohgasleitungsverbindung (5) an die Absaughaube (2) angeschlossen ist und in der der beim Zerschneiden anfallende Rohgasstrom in Reingas und Stäube trennbar ist.

2. Vorrichtung nach Anspruch 1, bei der an der Anschlußstelle zwischen der Absaughaube (2) und der Rohgasleitungsverbindung (5) ein Funkenabscheider (3) angeordnet ist, der seinerseits an eine Staubtonne (4) angeschlossen ist.

3. Vorrichtung nach Anspruch 1 oder 2, bei der die Rohgasleitungsverbindung (5) aus mit einer schwer entflammbaren Kunststoffummantelung versehenen Spirallutten besteht.

4. Vorrichtung nach einem der Ansprüche 1 - 3, bei der der Unterdruck zur Absaugung des beim Zerschneiden des Bären (1) anfallenden Rohgasstroms mittels eines Ventilators (9) erzeugt wird, der am filteranlagenfernen Ende eines Reingaskanals (12) der Filteranlage (7) angeordnet ist.

5. Vorrichtung nach Anspruch 4, bei der zwischen dem Ventilator (9) und einem Reingasaustritt (11) ein Schalldämpfer (10) angeordnet ist.

6. Vorrichtung nach einem der Ansprüche 1 - 5, bei der am Staubaustrag der Filteranlage (7) eine Abzugsschnecke (13) angeordnet ist, von der aus der anfallende Staub mittels eines Rohrkettenförderers (14) in einen Staubsammelbunker (15) gefördert wird.

7. Vorrichtung nach Anspruch 6, bei der stromab des Bunkers (15) eine Zellenradschleuse (16) angeordnet ist, durch die der Staub dosiert in einen Mischer (17) aufgebbar ist.

8. Vorrichtung nach Anspruch 7, bei der der Mischer (17) an eine Befeuchtungseinrichtung angeschlossen ist, mittels der der zu behandelnde Staub in einen erdfeuchten Zustand bringbar ist, in dem er auf einem reversierbaren Förderband (18) aus dem Mischer (17) austragbar ist.

9. Vorrichtung nach einem der Ansprüche 1 - 8, bei der die Filteranlage (7) und die ihr nachgeschalteten Aggregate auf einem gemeinsamen mobilen Rahmen (8) angeordnet sind.

10. Vorrichtung nach einem der Ansrüche 1 - 9, bei der die Brennlanze (20) von einem verfahrbaren, mit einem geschlossenen Bedienungsstand versehenen Gerät aus fernbedienbar ausgestaltet ist.

11. Vorrichtung nach einem der Ansprüche 1 - 10, bei der die Filteranlage (7) als Reihenfilter in Sektionsbauweise ausgebildet und aus Filterschläuchen aufgebaut ist.

12. Vorrichtung nach Anspruch 11, bei der jede Filterschlauchreihe mittels oberhalb der Filterschläuche angeordneter Düsenrohre unabhängig rückspülbar ist, wobei die Düsenrohre an Druckluftspeicher angeschlossen sind, in denen integrierte Membranventile und gekapselte Magnetventile angeordnet sind, die durch ein elektronisches Steuergerät ansteuerbar sind.

Europäisches
Patentamt

**EUROPÄISCHER RECHERCHENBERICHT**

| | **EINSCHLÄGIGE DOKUMENTE** | | EP 92103734.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl ⁵) |
| A | DE - A - 2 927 311 (I.P.U.) * Fig. 1 * -- | 1 | B 23 K 7/10 |
| A | DE - A - 3 121 417 (BWG BERGWERK- UND WALZWERK- MASCHINENBAU GES. m.b.H.) * Fig. 1 * -- | 1 | |
| A | US - A - 2 756 842 (CHEMBERLIN) * Fig. 1 * -- | 1 | |
| A | DE - C - 3 606 308 (FÜCHTENKÖTTER) * Fig. * -- | 1 | |
| A | US - A - 4 058 299 (LINDKVIST) * Fig. 1 * -- | 1 | |
| A | US - A - 4 260 433 (JOHANSSON) * Fig. 2 * -- | 1 | RECHERCHIERTE SACHGEBIETE (Int. Cl ⁵) |
| A | US - A - 4 235 422 (SCHMUNCK) * Fig. 1 * ---- | 5 | B 23 K 7/00<br>B 23 K 37/00<br>B 22 D 11/00<br>B 22 D 31/00 |

Der vorliegende Recherchenbericht wurde für alle Patentansprüche erstellt.

| Recherchenort | Abschlußdatum der Recherche | Prüfer |
|---|---|---|
| WIEN | 10-06-1992 | BENCZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82